Europäisches Patentamt

(19) European Patent Office

Office européen des brevets

(11) EP 0 831 312 B1

(12) EUROPEAN PATENT SPECIFICATION

(45) Date of publication and mention
of the grant of the patent:
**17.10.2001 Bulletin 2001/42**

(51) Int Cl.[7]: **G01J 9/02**, G02F 1/01,
A61B 1/07, G01B 9/02,
G02F 1/225

(21) Application number: **96906116.7**

(22) Date of filing: **27.02.1996**

(86) International application number:
**PCT/RU96/00045**

(87) International publication number:
**WO 96/27121 (06.09.1996 Gazette 1996/40)**

(54) **OPTICAL FIBRE INTERFEROMETER AND OPTICAL FIBRE PIEZO-ELECTRIC MODULATOR**

INTERFEROMETER MIT OPTISCHEN FASERN UND PIEZOELEKTRISCHER MODULATOR MIT OPTISCHEN FASERN

INTERFEROMETRE A FIBRE OPTIQUE ET MODULATEUR PIEZOELECTRIQUE A FIBRE OPTIQUE

(84) Designated Contracting States:
**CH DE ES FR GB IT LI NL**

(30) Priority: **01.03.1995 RU 95102921**

(43) Date of publication of application:
**25.03.1998 Bulletin 1998/13**

(73) Proprietor: **Optical Coherence Technologies, Inc.
Cleveland, Ohio 44144 (US)**

(72) Inventors:
• **FELDSHTEIN, Felix Isaakovich
Nizhny Novgorod, 603104 (RU)**
• **GELIKONOV, Grigory Valentinovich
Nizhny Novgorod, 603163 (RU)**
• **GELIKONOV, Valentin Mihailovich
Nizhny Novgorod, 603163 (RU)**
• **GLADKOVA, Natalya Dorofeevna
Nizhny Novgorod, 603155 (RU)**
• **LEONOV, Vladimir Innokentievich
Nizhny Novgorod, 603122 (RU)**
• **SERGEEV, Alexandr Mihailovich
Nizhny Novgorod, 603000 (RU)**

(74) Representative: **Spitz, Volker, Dr. et al
Spitz, Klinger & Partner GbR,
Bavariaring 20
80336 München (DE)**

(56) References cited:
DE-C- 4 204 521     GB-A- 2 191 596
GB-A- 2 221 999     GB-A- 2 234 828
US-A- 4 703 287     US-A- 5 202 745
US-A- 5 313 266     US-A- 5 321 501

• SPRAVOCHNIK VOLS, "Volokonnye
Opticheskie Linu Soyazi", 1988, "Tekhnika",
(Kiev), pages 34-35.

## Description

Technical Field

The present invention relates to physical engineering, in particular, to the class of devices used in the study of internal structure of objects, and can be applied for medical diagnostics of individual organs and systems of human body, as well as for industrial diagnostics, for example, control of technological processes.

Background Art

Optical fiber interferometers find application in apparatus designed for studies of dispersive media, in particular, optical coherence tomography of biological tissues (see J.A.Izatt, J.G.Fijimoto et al., Optical coherence microscopy in scattering media, OPTICS LETTERS, vol. 19, No.8, April 15, 1994, p.590-592, and also X.Clivaz et al., High resolution reflectometry in biological tissues, OPTICS LETTERS, vol.17, No.1, January 1, 1992). Both these papers offer a description of a Michelson optical fiber interferometer commonly comprising a beam-splitter, a sampling arm provided with an optical probe at its end, and a reference arm incorporating an optical fiber piezoelectric phase modulator with a reference mirror installed at its end and connected with a scanning element. Optical length of the reference arm can be varied within a fairly wide range (at least several tens of operating wavelengths of the interferometer) by means of mechanical step-by-step alteration of the reference mirror position. Incorporating of a piezoelectric phase modulator in the interferometer aim to suit the interferometer for optical coherence tomography applications allows for lock-in detection of the information-carrying signal, thus providing a fairly high sensitivity of measurements, and by moving the reference mirror it is possible to perform in-depth scanning of a sample.

An optical fiber interferometer comprising two beam-splitters, a sampling and reference arms is known from EPO Pat.No 0,362,474 B1, 17.03.93, in which an optical fiber delay line in the form of an optical fiber loop serves as a reference arm, and the sampling arm comprises a phase modulator. However, the reference arm of this interferometer has a fixed optical length, which makes it unfit for optical coherence tomography devices.

Another known optical fiber interferometer suited for optical coherence tomography is designed as Mach-Zender interferometer (see J.A.Izatt, J.G.Fujimoto, et al., Micron-resolution biomedical imaging with optical coherence tomography, Optics & Photonic News, October 1993, vol.4, No.10, p.14-19) comprising a sampling and reference arms and two beam-splitters. This interferometer is used for measurements of scattered radiation in a plane parallel to the surface of tested sample, without scanning the sample in depth, hence it does not comprise a reference mirror. Modulation of interference signal is achieved by incorporating an optical fiber piezoelectric modulator into the reference arm of the interferometer.

Another available optical fiber interferometer is designed as a Michelson interferometer having a beam-splitter, sampling and reference arms both of which comprise an optical fiber piezoelectric modulator. The sampling arm has a measuring probe at the end, the reference arm end being provided with a reference mirror, connected with a scanning element (X.J.Wang et al., Characterization of human scalp hairs by optical low coherence reflectometry, OPTICS LETTERS, vol.20, No.5, 1995, pp.524-526). The signals are modulated in both arms of the interferometer and a relative phase shift is provided by the two optical fiber piezoelectric modulators. The optical length of the sampling arm is changed to a value of at least several tens of operating wavelengths of the interferometer by moving the reference mirror.

Major disadvantage inherent in all of the above-described optical fiber interferometers is the mechanical step-by-step moving of reference mirror used for in-depth scanning of the sample, which does not allow to study media that change their properties or position relative to the optical probe faster than the time required to take measurements that would ensure adequate reconstruction of the profile under study. It is clear, therefore, that the *in vivo* investigation of tissues is quite problematic, since they have to be rigidly fixed, which is impossible in some cases like, for example, with tissues of human eye.

The above paper by J.A.Izatt, J.G.Fujimoto et al. gives a description of a fiber interferometer for optical coherence tomography, designed as a Michelson interferometer comprising a beam-splitter, a sampling arm with a measuring probe at the end, and a reference arm whose end is provided with a movable at a constant speed reference mirror connected with a scanning element. This arrangement allows for an in-depth scanning of objects, shorter sampling time than as with the step-by-step mechanism of mirror movement, and obviates the necessity for using a piezoelectric modulator, since the information-carrying signal is received in this case using a Doppler frequency shift induced in the reference arm by a constant speed movement of the reference mirror.

An optical fiber interferometer incorporated in a device for optical coherence tomography is known from the paper by A.Sergeev et al., *In vivo* optical coherence tomography of human skin microstructure, Proc.SPIE, v.2328, 1994, p.144. This interferometer comprises a beam-splitter, sampling and reference arms, the sampling arm having an optical probe at the end, the reference arm incorporating a unit for changing the optical length of said arm. This unit can be constructed both as an optical fiber piezoelectric modulator and as a reference mirror installed at the end of the reference arm and having a capability of moving at a constant speed along the optical axis of the interferometer. Constructing this unit as an optical fiber piezoelectric modulator allows for quite fast scanning but at the expense of the scanning depth. When the unit is made as a mechanical system for constant speed moving of reference mirror the interferometer has the same limitations as the interferometer known from the paper by J.A.Izatt, J.G. Fujimoto et al.

The optical fiber interferometer known from U. S.Pat. No 5,312,501, publ. 14.01.94, comprises a beam-splitter optically connected with a sampling and reference arms, both of which including a fiber part. One of the arms of the interferometer includes a scanning element, allowing changing of the optical length of said interferometer arm by at least several tens of operating wavelengths of the interferometer. In one embodiment the scanning element is constructed as a device that provides for mechanical movement of the reference mirror, while in another embodiment the scanning element is constructed as a device that provides for respective mechanical movement of the sample. One of the arms of the interferometer comprises an optical fiber piezoelectric modulator constructed as an optical fiber piezoelectric controllable delay line. The optical fiber piezoelectric modulator allows changing of the optical length of said interferometer arm in the range from a portion to units of the operating wavelength of the interferometer and provides for additional phase modulation of the optical signal which is used either for lock-in demodulation or for increasing of sensitivity when receiving signals at Doppler shift frequency. The sampling arm is provided with an optical probe.

When the above described interferometers are used in optical coherence tomography applications for investigating internal structure of objects, the mechanical system for constant speed moving of reference mirror requires high precision of mechanical scanning. Besides, in the *in vivo* studies of tissues the mechanical scanning system inertia sets the same limitations as the step-by-step reference mirror moving mechanism and, therefore, it is impossible to investigate samples whose properties or position relative to the optical probe change in a shorter time than is required for measurements reliable enough to recover the test profile with sufficient accuracy.

The optical fiber piezoelectric modulator used in optical fiber interferometers can be constructed, for example, as a cylindrical body of plastic material having piezoelectric properties (see EPO Pat. application No 0,356, 056 A1 published 28.0290 bul.90/09). A coil of optical fiber embeds the cylindrical body therein, the fiber coil axis being aligned with the longitudinal axis of the cylinder. The modulator has electrodes deposited on the opposite ends of the cylinder.

However, since an increase in the coil diameter is directly proportional to the transverse-to-longitudinal size ratio of the cylinder, which is small for this modulator, the optical fiber length within the cylinder can vary but by a small value (the order of units of operating wavelengths). Besides, a relatively large mass of the cylindrical body conditions its inertia. All these factors make this optical fiber piezoelectric modulator unsuitable as a means to ensure both desired depth of scanning and fast sampling rate in fiber optic interferometers.

The optical fiber piezoelectric modulator according to EPO Pat. application No 0,460,635 A2 (published 11.12.91 bul.91/50) comprises a piezoelectric plate with electrodes located on first and second opposite surfaces of the plate, and an optical fiber a part of which is fastened to one surface of the piezoelectric plate to allow changing of the fiber length. This system has much less inertia and provides larger specific lengthening of optical fiber than the arrangement described above, owing to the piezoelectric part being formed as a thin plate. However, specific lengthening of optical fiber provided by this optical fiber piezoelectric modulator is insufficient for using it in an optical fiber interferometer used in a device for optical coherent tomography of biological tissues *in vivo.*

In the above EPO Patent application a modification is described in which a large absolute lengthening of optical fiber is achieved by means of an in-series connection of a large quantity of piezoelectric elements. However, the last structure has large overall dimensions and, besides, utilization of it will call for substantial complication of the optical fiber interferometer control system.

In US Pat. No. 4,703,287 publ. 27.10.87 a phase modulator is described which is a so-called "sandwich" type modulator and comprises two PZT plates exhibiting a strong perpendicular inverse piezoeffect, which are placed on two sides of a plate exhibiting a small perpendicular inverse piezoeffect, but high environmental stability, namely a quartz plate. Control voltage is applied to electrodes placed on top and bottom surfaces of the two plates exhibiting a strong perpendicular inverse piezoeffect. An optical fiber in a form of a strand or loops is bonded to the relatively stable material, or to a structure attached thereto for longitudinal stretching.

However, due to the fact that the optical fiber is attached to the plate made of relatively stable material the most longitudinal stretching which can be achieved by this phase modulator is a full wavelength modulation, even in the case when the optical fiber is arranged in loops. Thus, this phase modulator is unable to provide the depth of scanning necessary for installing it in an optical fiber interferometer suited for optical coherent tomography applications.

Disclosure of Invention

The present invention was devised in an attempt to develop an optical fiber interferometer providing, in optical coherent tomography applications, a capability for investigating to sufficient depth of the media with short time of changing of optical characteristics or its position relative to the optical probe, for example, biotissues *in vivo*, and to construct an optical fiber piezoelectric modulator suited for such an optical fiber interferometer.

The developed optical fiber interferometer comprises a beam-splitter optically connected with a sampling and a reference arm, both of which including a fiber part. At least one of the interferometer arms, for example, the reference one, comprises a scanning element, constructed to allow changing of the optical length of said interferometer arm by at least several tens of operating wavelengths of the interferometer, and a first optical fiber piezoelectric modulator constructed as an optical fiber piezoelectric controllable delay line. The sampling arm is provided with an optical probe.

According to the invention the first optical fiber piezoelectric modulator serves as said scanning element.

In one embodiment, the first optical fiber piezoelectric modulator comprises a piezoelectric plate with electrodes located on first and second opposite surfaces of the plate, the fiber part of the at least one interferometer arm being fastened to at least one surface of the piezoelectric plate allowing changing of the length of said arm.

In a particular embodiment the length of the fiber part of the at least one interferometer arm exceeds the diameter of the piezoelectric plate.

In another particular embodiment the fiber part of the at least one interferometer arm is arranged as a spiral.

In another particular embodiment the fiber part of the at least one interferometer arm is fastened over its entire length to the respective surface of the piezoelectric plate.

In another particular embodiment the piezoelectric plate is made in a disc form.

In another embodiment the sampling and reference arms of the interferometer are constructed to allow anti-phase changing of their optical lengths, the other arm of the interferometer, for example, the sampling one, comprising a second optical fiber piezoelectric modulator.

In a different embodiment the second optical fiber piezoelectric modulator is constructed analogous with the first optical fiber piezoelectric modulator.

In a particular embodiment the optical fiber interferometer is based on anisotropic fiber.

The developed optical fiber piezoelectric modulator comprises a piezoelectric plate exhibiting a strong perpendicular inverse piezoeffect with electrodes located on first and second opposite surfaces of the plate, and an optical fiber whose first part is fastened so that the fiber length can be changed.

According to the invention the developed optical fiber piezoelectric modulator is constructed as an optical fiber piezoelectric controllable delay line with the first part of the optical fiber fastened to the first surface of the piezoelectric plate effective to allow changing of the optical length of optical fiber by at least several tens of wavelengths of optical radiation when said radiation is present in optical fiber and the length of the first part of the optical fiber exceeding the diameter of the piezoelectric plate.

In one embodiment the first part of the optical fiber is arranged as a spiral on the first surface of the piezoelectric plate.

In a different embodiment the first part of the optical fiber is fastened over the entire length to the first surface of the piezoelectric plate.

In another embodiment the second part of the optical fiber is fastened to a second surface of the piezoelectric plate.

In a different embodiment the length of the second part of the optical fiber exceeds the diameter of the piezoelectric plate.

In a particular embodiment the second part of the optical fiber is arranged as a spiral.

In another particular embodiment the second part of the optical fiber is fastened over the entire length to the second surface of the piezoelectric plate.

In a different particular embodiment the piezoelectric plate is made in a disc form.

In another particular embodiment anisotropic optical fiber is used.

In the developed optical fiber interferometer an optical fiber piezoelectric modulator constructed as an optical fiber delay line serves as a scanning element, which provides for practically inertialess high-speed changing of the interferometer arm optical length and, hence, of the difference in the optical lengths of the arms by at least several tens of operating wavelengths of the interferometer. That is achieved by the fact that the fiber part of the interferometer arm is placed on at least one of the opposite surfaces of the piezoelectric plate and fastened to it. Arranging of the optical fiber as a spiral allows to make smaller the overall dimensions of the interferometer, while fastening the optical fiber over its entire length provides for maximum changing of the fiber length. All of that allows to apply the optical fiber interferometer to investigate media with short time (about a second) of changing of optical characteristics or its position relative to the optical probe, for example, biotissues *in vivo.* Having the sampling and reference arms constructed to provide for anti-phase changing of their optical lengths, and having the other arm's function also performed by an optical fiber piezoelectric modulator constructed as an optical fiber controllable delay line enhances the technical result. Constructing the second optical fiber piezoelectric modulator analogous with the first optical fiber piezoelectric modulator allows to double the scan depth of an object under study. Having the optical fiber interferometer based on anisotropic fiber excludes the necessity of polarization control during making measurements with using said interferometer.

The optical fiber piezoelectric modulator of the invention has been constructed as an optical fiber piezoelectric controllable delay line. The optical fiber length exceeds diameter of the plate, said fiber being fastened to two surfaces of the plate which is made in a disc form, while the fiber is arranged as a spiral and fastened over it's entire length to the plate surface. This arrangement provides changing of the length of optical fiber within a wide range keeping the modulator inertialess and compact and, hence, allows application of said modulator in an optical fiber interferometer to provide a desired depth of scanning in media with short time of changing of optical characteristics or its position relative to the optical probe, for example, biotissues *in vivo*. Constructing the piezoelectric modulator based on anisotropic fiber excludes the necessity for polarization control during making measurements.

Brief Description of Drawings

The features and advantages of the invention will now be described in detail with reference to the accompanying drawings, in which:

Fig. 1 is a schematic block diagram of an optical fiber interferometer in accordance with claim 1.
Fig. 2 is a schematic block diagram of an optical fiber interferometer in accordance with claim 8.
Fig. 3 is a top and cross-sectional view of a modulator in accordance with claim 10.
Fig. 4 is a top view of a modulator in accordance with claim 11.
Fig. 5 is a top and cross-sectional view of one particular embodiment of a modulator in accordance with claim 17.

Best Mode for Carrying out the Invention

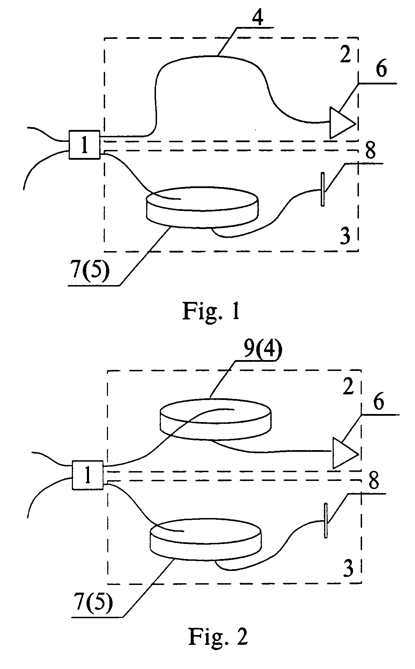

Referring to Fig. 1, an optical fiber interferometer is shown which is constructed as a Michelson interferometer and operates as follows. The input radiation passes to beam-splitter 1, which is optically coupled with sampling and reference arms 2, 3, respectively. Sampling and reference arms 2, 3 incorporate fiber parts 4, 5, respectively. Fiber parts 4, 5 may be a PANDA-type optical fiber. The radiation is transmitted through fiber part 4 of sampling arm 2 to optical probe 6. Fiber part 5 of reference arm 3, being placed on at least one surface, for example, 11 of piezoelectric plate 10 of piezoelectric modulator 7, provides for transmitting the radiation to reference mirror 8. Optical probe 6 focuses the radiation on the sample (not shown in Fig. 1) and simultaneously guides back the radiation scattered from the sample into fiber part 4 of interferometer sampling arm 2, while reference mirror 8 reflects the incident radiation backward into fiber part 5 of reference arm 3. The radiation scattered from the sample is transmitted through fiber part 4 of sampling arm 2 to beam-splitter 1 where it interferes with the radiation arriving on beam-splitter 1 after being reflected by reference mirror 8, via fiber part 5 of reference arm 3, i.e. via piezoelectric modulator 7. As mentioned above, piezoelectric modulator 7 is constructed as an optical fiber controllable delay line to allow changing of the optical length of reference arm 3 by at least several tens of operating wavelengths of the interferometer, i.e. it serves as said scanning element. So being driven by the control voltage source (not shown in the drawing), piezoelectric modulator 7 provides a change in the optical length of reference arm 3 of the interferometer and, hence, a change in the difference of optical lengths of sampling and reference arms 2,3 of the interferometer in accordance with the rule of the control voltage, within the limits required for scanning the sample in depth. The later is accomplished the following way:

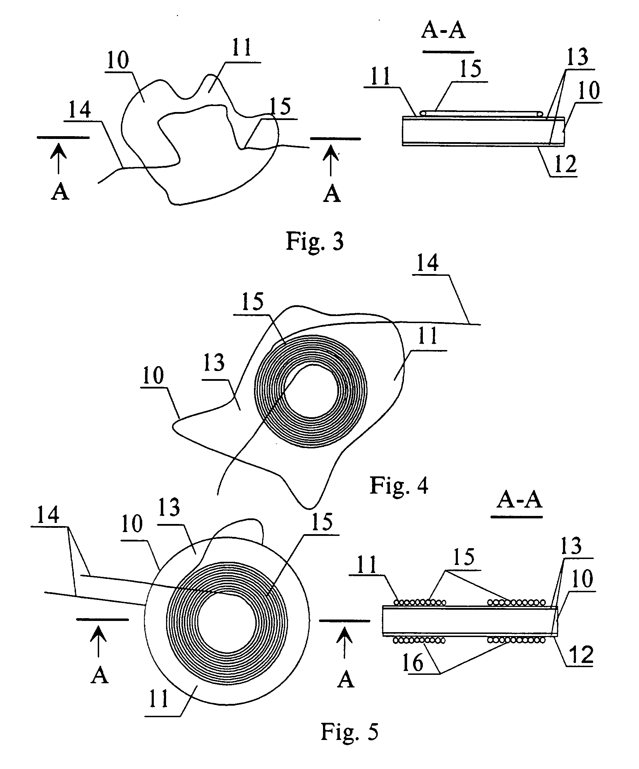

Control voltage from a source (not shown in the drawing) is applied to electrodes 13, made of metal, for example, silver, of piezoelectric modulator 7 (see Fig. 3). The piezoelectric plate 10 may be made of a piezoelectric material exhibiting a strong perpendicular inverse piezoeffect, for example, of PZT-5 type.

Electrodes 13 produce a difference in the potentials ($\varphi$) on first and second surfaces 11, 12 of piezoelectric plate 10, causing a perpendicular inverse piezoelectric effect in plate 10. The absolute change ($\Delta R$) of diameter of first surface 11 of plate 10 is defined by the following expression:

$$\Delta R = \frac{R}{2h} d_{33} \varphi,$$

where R is the half-diameter of first surface 11 of plate 10; h is the thickness of plate 10; and $d_{33}$ is the piezoelectric modulus.

An increase in the area of first surface 11 of plate 10 in accordance with the rule of the control voltage causes respective stretching of the first part 15 of optical fiber 14, which is fastened to first surface 11. Since the length of first part 15 of optical fiber 14 can essentially exceed the diameter of piezoelectric plate 10, so absolute lengthening of first part 15 of optical fiber 14 is much greater than $\Delta R$ and depends on the way the fiber is arranged on the first surface. According to the above expression, when about 15 m of optical fiber is fastened to first surface 11 of plate 10, one can achieve an absolute lengthening of fiber by a value close to 1.5 mm. In other words, the absolute lengthening of first part 15 of optical fiber 14 can reach at least several tens of radiation wavelengths in accordance with the rule of the control voltage. That allows to use the optical fiber piezoelectric modulator in the developed optical fiber interferometer, where it serves as said scanning element, the later providing for the necessary in-depth scanning of media, with short time of changing of optical characteristics or its position relative to the optical probe, for example biotissues in vivo.

Optical fiber piezoelectric modulators shown in Fig. 4 and 5 operate analogous with the one shown on Fig. 3. So the optical fiber interferometer shown in Fig. 1 when using piezoelectric modulator 7, constructed as shown in Fig. 4 and 5, operates the same way as it does when using piezoelectric modulator 7, constructed as shown in Fig. 3.

In the optical fiber piezoelectric modulator shown in Fig. 4 first part 15 of optical fiber 14 is arranged as a spiral. Therefore, absolute lengthening of first part 15 of optical fiber 14 and, hence, its optical length may change within the range of at least several tens of radiation wavelengths in compliance with the rule of the control voltage.

In the optical fiber piezoelectric modulator shown in Fig. 5 the optical fiber 14 is fastened to first surface 11 and to second surface 12 of piezoelectric plate 10. The lengths of first and second parts 15, 16, respectively, exceed the diameter of piezoelectric plate 10. Since in this embodiment first and second parts 15, 16, respectively, of optical fiber 14 are arranged as a spiral, the absolute lengthening both of the first 15 and second 16 parts of optical fiber 14 and, therefore, the change in their optical lengths can reach at least several tens of radiation wavelengths in accordance with the rule of the control voltage. In the optical fiber piezoelectric modulator shown in Fig. 5 piezoelectric plate 10 is made in a disc form. However, it must be noted that with no dependence on the form of piezoelectric plate 10 the ratio of plate 10 diameter to its thickness has to be chosen such, so as to provide for a desired lengthening of first and/or second parts 15, 16 of optical fiber 14, taking account of the particular configuration of first and/or second parts 15, 16 of optical fiber 14.

When the optical fiber interferometer shown in Fig. 1 is used in a device for optical coherence tomography, the informative parameter will be the dependence of the interference signal intensity on the difference between optical lengths of the interferometer arms.

The optical fiber interferometer shown in Fig. 2 is constructed as a Michelson interferometer too and operates similarly to that in Fig. 1. In the embodiment shown in Fig. 2 fiber part 4 of sampling arm 5 is placed on at least one surface, for example, 11 of plate 10 of piezoelectric modulator 9, constructed as an optical fiber delay line which allows changing of the optical length of arm 3 by at least several tens of operating wavelengths of the interferometer. Piezoelectric modulators 7, 9 are connected in anti-phase to a source of control voltage (not shown in the drawing). When the control voltage is applied piezoelectric modulators 7, 9 provide together, in compliance with the rule of the control voltage, a change in the difference between optical lengths of interferometer sampling and reference arms 2, 3 within the range twice that for the embodiment shown in Fig. 1.

Industrial Applicability

The optical fiber interferometer of the invention of which the created optical fiber piezoelectric modulator forms a part can be used in systems for investigating dispersive media, in particular, in optical coherence tomography apparatus providing for the necessary scanning depth of media with short time of changing of optical characteristics or its position relative to the optical probe, for example biotissues *in vivo*. It must be pointed out that the developed embodiments can be implemented with using standard means.

**Claims**

1. An optical fiber interferometer, comprising a beamsplitter (1) optically connected with a sampling and a reference arm (2, 3), both of which including a fiber part (4, 5), while at least one of the interferometer arms (2 or 3) comprises a scanning element, constructed to allow changing of the optical length of said interferometer arm (2 or 3) by at least several tens of operating wavelengths of the interferometer, and a first optical fiber piezoelectric modulator (7) constructed as an optical fiber piezoelectric controllable delay line, the sampling arm (2) being provided with an optical probe (6), **characterized in that** the first optical fiber piezoelectric modulator (7) serves as said scanning element.

2. An optical fiber interferometer as claimed in claim 1, **characterized in that** the first optical fiber piezoelectric modulator (7) comprises a piezoelectric plate (10) with electrodes (13) located on first (11) and second (12) opposite surfaces of the plate (10), the fiber part (4 or 5) of the at least one interferometer arm (2 or 3) being fastened to at least one surface (11 or 12) of the piezoelectric plate (10) allowing changing of the optical length of said arm.

3. An optical fiber interferometer as claimed in claim 2, **characterized in that** the length of the fiber part (4 or 5) of the at least one interferometer arm (2 or 3) exceeds the diameter of the piezoelectric plate (10).

4. An optical fiber interferometer as claimed in claim 2 or in claim 3, **characterized in that** the fiber part of the at least one interferometer arm (2 or 3) is arranged as a spiral.

5. An optical fiber interferometer as claimed in claim 2 or in claim 3 or in claim 4, **characterized in that** the fiber part (4 or 5) of the at least one interferometer arm (2 or 3) is fastened over the entire length to the respective surface (11 or 12) of the piezoelectric plate (10).

6. An optical fiber interferometer as claimed in any of claims 2 to 5, **characterized in that** the piezoelectric plate (10) is made in a disc form.

7. An optical fiber interferometer as claimed in any of claims 1-6, **characterized in that** the sampling and reference interferometer arms (2, 3) are constructed to allow anti-phase changing of their optical lengths, the other interferometer arm (3 or 2) comprising a second optical fiber piezoelectric modulator (9).

8. An optical fiber interferometer as claimed in claim 7, **characterized in that** the second optical fiber piezoelectric modulator (9) is constructed analogous with the first optical fiber piezoelectric modulator (7).

9. An optical fiber interferometer as claimed in any of claims 1-8, **characterized in that** the optical fiber interferometer is based on anisotropic fiber.

10. An optical fiber piezoelectric modulator comprising a piezoelectric plate (10) exhibiting a strong perpendicular inverse piezoeffect with electrodes (13) located on first and second opposite surfaces (11,12) of the plate (10), and an optical fiber (14) a first part (15) of which is fastened so that the fiber length can be changed, **characterized in that** the optical fiber piezoelectric modulator is constructed as an optical fiber piezoelectric controllable delay line with the first part (15) of the optical fiber (14) fastened to the first surface (11) of the piezoelectric plate (10) effective to allow changing of the optical length of optical fiber (14) by at least several tens of wavelengths of optical radiation when said radiation is present in optical fiber (14) and the length of the first part (15) of the optical fiber (14) exceeding the diameter of the piezoelectric plate (10).

11. An optical fiber piezoelectric modulator as claimed in claim 10, **characterized in that** the first part (15) of the optical fiber (14) is arranged as a spiral.

12. An optical fiber piezoelectric modulator as claimed in claim 10 or in claim 11, **characterized in that** the first part (15) of the optical fiber (14) is fastened over the entire length to the first surface (11) of the piezoelectric plate (10).

13. An optical fiber piezoelectric modulator as claimed in claim 10 or in claim 11 or in claim 12, **characterized in that** a second part (16) of the optical fiber (14) is fastened to the second surface (12) of the piezoelectric plate (10).

14. An optical fiber piezoelectric modulator as claimed in claim 13, **characterized in that** the length of the second part (16) of the optical fiber (14) exceeds the diameter of the piezoelectric plate (10).

15. An optical fiber piezoelectric modulator as claimed in claim 13 or in claim 14, **characterized in that** the second part (16) of the optical fiber (14) is arranged as a spiral.

16. An optical fiber piezoelectric modulator as claimed in claim 13 or in claim 14 or in claim 15, **characterized in that** the second part (16) of the optical fiber (14) is fastened over the entire length to the second surface (12) of the piezoelectric plate (10).

17. An optical fiber piezoelectric modulator as claimed in any of claims 10-16, **characterized in that** the piezoelectric plate (10) is made in a disc form.

18. An optical fiber piezoelectric modulator as claimed in any of claims 10-17, **characterized in that** anisotropic fiber is used.

**Patentansprüche**

1. Optisches Faserinterferometer, umfassend einen Strahlteiler (1), der optisch mit einem Proben- und einem Referenzarm (2, 3) verbunden ist, die beide einen Faserteil (4, 5) aufweisen, wobei wenigstens einer der Interferometerarme (2 oder 3) ein Scanningelement umfaßt, das dazu ausgebildet ist, ein Verändern der optischen Länge des Interferometerarms (2 oder 3) um wenigstens mehrere Zehnfache der Betriebswellenlängen des Interferometers zu ermöglichen, sowie einen ersten optischen piezoelektrischen Fasermodulator (7), der als eine steuerbare optische piezoelektrische Faser-Verzögerungsleitung ausgebildet ist, wobei der Probenarm (2) mit einer optischen Sonde (6) versehen ist, **dadurch gekennzeichnet, daß** der erste optische piezoelektrische Fasermodulator (7) als das Scanningelement dient.

2. Optisches Faserinterferometer nach Anspruch 1, **dadurch gekennzeichnet, daß** der erste optische piezoelektrische Fasermodulator (7) eine piezoelektrische Platte (10) umfaßt, wobei Elektroden (13) an ersten (11) und zweiten (12) entgegengesetzten Oberflächen der Platte (10) angeordnet sind, wobei der Faserteil (4 oder 5) des wenigstens einen Interferometerarms (2 oder 3) an wenigstens einer Oberfläche (11 oder 12) der piezoelektrischen Platte zum Erlauben eines Veränderns der optischen Länge des Arms befestigt ist.

3. Optisches Faserinterferometer nach Anspruch 2, **dadurch gekennzeichnet, daß** die Länge des Faserteils (4 oder 5) des wenigstens einen Interferometerarms (2 oder 3) den Durchmesser der piezoelektrischen Platte (10) übersteigt.

4. Optisches Faserinterferometer nach Anspruch 2 oder Anspruch 3, **dadurch gekennzeichnet, daß** der Faserteil des wenigstens einen Interferometerarms (2 oder 3) als eine Spirale angeordnet ist.

5. Optisches Faserinterferometer nach Anspruch 2 oder Anspruch 3 oder Anspruch 4, **dadurch gekennzeichnet, daß** der Faserteil (4 oder 5) des wenigstens einen Interferometerarms (2 oder 3) über die ganze Länge an der jeweiligen Oberfläche (11 oder 12) der piezoelektrischen Platte (10) befestigt ist.

6. Optisches Faserinterferometer nach einem der Ansprüche 2 bis 5, **dadurch gekennzeichnet, daß** die piezoelektrische Platte (10) scheibenförmig ausgebildet ist.

7. Optisches Faserinterferometer nach einem der Ansprüche 1-6, **dadurch gekennzeichnet, daß** die Proben- und Referenzinterferometerarme (2, 3) dazu ausgebildet sind, ein gegenphasiges Verändern von deren optischen Längen zu ermöglichen, wobei der andere Interferometerarm (3 oder 2) einen zweiten optischen piezoelektrischen Fasermodulator umfaßt.

8. Optisches Faserinterferometer nach Anspruch 7, **dadurch gekennzeichnet, daß** der zweite optische piezoelektrische Fasermodulator (9) analog dem ersten optischen piezoelektrischen Fasermodulator (7) ausgebildet ist.

9. Optisches Faserinterferometer nach einem der Ansprüche 1-8, **dadurch gekennzeichnet, daß** das optische Faserinterferometer auf einer anisotropen Faser basiert.

10. Optischer piezoelektrischer Fasermodulator, umfassend eine piezoelektrische Platte (10), die einen starken senkrechten inversen Piezoeffekt zeigt, wobei Elektroden (13) an ersten und zweiten entgegengesetzten Oberflächen (11, 12) der Platte (10) angeordnet sind, sowie eine optische Faser (14), von der ein erster Teil (15) befestigt ist, derart, daß die Faserlänge verändert werden kann, **dadurch gekennzeichnet, daß** der optische piezoelektrische Fasermodulator als eine steuerbare optische piezoelektrische Faser-Verzögerungsleitung ausgebildet ist, wobei der erste Teil (15) der optischen Faser (14) an der ersten Oberfläche (11) der piezoelektrischen Platte (10) befestigt ist, um zu erlauben, daß die optische Länge der optischen Faser (14) um wenigstens mehrere Zehnfache von Wellenlängen optischer Strahlung verändert wird, wenn die Strahlung in der optischen Faser (14) vorliegt, und wobei die Länge des ersten Teils (15) der optischen Faser (14) den Durchmesser der piezoelektrischen Platte (10) übersteigt.

11. Optischer piezoelektrischer Fasermodulator nach Anspruch 10, **dadurch gekennzeichnet, daß** der erste Teil (15) der optischen Faser (14) als eine Spirale angeordnet ist.

12. Optischer piezoelektrischer Fasermodulator nach Anspruch 10 oder Anspruch 11, **dadurch gekennzeichnet, daß** der erste Teil (15) der optischen Faser (14) über die ganze Länge an der ersten Oberfläche (11) der piezoelektrischen Platte (10) befestigt ist.

13. Optischer piezoelektrischer Fasermodulator nach Anspruch 10 oder Anspruch 11 oder Anspruch 12, **dadurch gekennzeichnet, daß** ein zweiter Teil (16) der optischen Faser (14) an der zweiten Oberfläche (12) der piezoelektrischen Platte (10) befestigt ist.

14. Optischer piezoelektrischer Fasermodulator nach Anspruch 13, **dadurch gekennzeichnet, daß** die Länge des zweiten Teils (16) der optischen Faser (14) den Durchmesser der piezoelektrischen Platte (10) übersteigt.

15. Optischer piezoelektrischer Fasermodulator nach Anspruch 13 oder Anspruch 14, **dadurch gekennzeichnet, daß** der zweite Teil (16) der optischen Faser (14) als eine Spirale angeordnet ist.

16. Optischer piezoelektrischer Fasermodulator nach Anspruch 13 oder Anspruch 14 oder Anspruch 15, **dadurch gekennzeichnet, daß** der zweite Teil (16) der optischen Faser (14) über die ganze Länge an der zweiten Oberfläche (12) der piezoelektrischen Platte (10) befestigt ist.

17. Optischer piezoelektrischer Fasermodulator nach einem der Ansprüche 10-16, **dadurch gekennzeichnet, daß** die piezoelektrische Platte (10) scheibenförmig ausgebildet ist.

18. Optischer piezoelektrischer Fasermodulator nach einem der Ansprüche 10-17, **dadurch gekennzeichnet, daß** eine anisotrope Faser verwendet wird.

**Revendications**

1. Interféromètre à fibre optique, comprenant un séparateur (1) de faisceaux relié optiquement à un bras (2) d'échantillonnage et un bras (3) de référence qui comprennent tous deux une partie (4, 5) en fibre, tandis qu'au moins un des bras (2 ou 3) d'interféromètre comprend un élément de balayage construit pour permettre une modification de la longueur optique dudit bras (2 ou 3) d'interféromètre d'au moins quelques dizaines de longueurs d'onde de fonctionnement de l'interféromètre, et une premier modulateur piézo-électrique (7) à fibre optique construit comme une ligne piézo-électrique à retard réglable à fibre optique, le bras (2) d'échantillonnage étant muni d'une sonde optique (6), **caractérisé en ce que** le premier modulateur piézo-électrique (7) à fibre optique joue le rôle dudit élément de balayage.

2. Interféromètre à fibre optique selon la revendication 1, **caractérisé en ce que** le premier modulateur piézo-électrique (7) à fibre optique comprend une plaque piézo-électrique (10) ayant des électrodes (13) situées sur des première (11) et deuxième (12) surfaces opposées de la plaque, la partie (4 ou 5) en fibre du au moins un bras (2 ou 3) d'interféromètre étant fixée à au moins une surface (11 ou 12) de la plaque piézo-électrique (10) pour permettre une modification de la longueur optique dudit bras.

3. Interféromètre à fibre optique selon la revendication 2, **caractérisé en ce que** la longueur de la partie (4 ou 5) en fibre du au moins un bras (2 ou 3) d'interféromètre dépasse le diamètre de la plaque piézo-électrique (10).

4. Interféromètre à fibre optique selon la revendication 2 ou la revendication 3, **caractérisé en ce que** la partie (4 ou 5) en fibre du au moins un bras (2 ou 3) d'interféromètre est disposée en spirale.

5. Interféromètre à fibre optique selon l'une quelconque des revendications 2 à 4, **caractérisé en ce que** la partie (4 ou 5) en fibre du au moins un bras (2 ou 3) d'interféromètre est fixée sur toute la longueur à la surface correspondante (11 ou 12) de la plaque piézo-électrique (10).

6. Interféromètre à fibre optique selon l'une quelconque des revendications 2 à 5, **caractérisé en ce que** la plaque piézo-électrique (10) est construite en forme de disque.

7. Interféromètre à fibre optique selon l'une quelconque des revendications 2 à 6, **caractérisé en ce que** les bras (2, 3) d'échantillonnage et de référence sont construits pour permettre une modification en opposition de phase de leurs longueurs optiques, l'autre bras (3 ou 2) d'interféromètre comprenant un deuxième modulateur piézo-électrique (9) à fibre optique.

8. Interféromètre à fibre optique selon la revendication 7, **caractérisé en ce que** le deuxième modulateur piézo-électrique (9) à fibre optique est construit d'une manière analogue au premier modulateur piézo-électrique (7) à fibre optique.

9. Interféromètre à fibre optique selon l'une quelconque des revendications 1 à 8, **caractérisé en ce que** l'interféromètre à fibre optique est basé sur une fibre anisotrope.

10. Modulateur piézo-électrique à fibre optique comprenant une plaque piézo-électrique (10) présentant un effet piézo-électrique inverse perpendiculaire élevé, ayant des électrodes (13) situées sur des première (11, 12) et deuxième surfaces opposées de la plaque (10), et une fibre optique (14) dont une première partie (15) est fixée de sorte que la longueur de fibre puisse être modifiée, **caractérisé en ce que** le modulateur piézo-électrique à fibre optique est construit comme une ligne piézo-électrique à retard réglable à fibre optique, avec la première partie (15) de la fibre optique (14) fixée sur la première (11) surface de la plaque piézo-électrique (10) de manière à permettre une modification de la longueur optique de la fibre optique (14) d'au moins quelques dizaines de longueurs d'onde de radiation optique quand ladite radiation est présente dans la fibre optique (14), et la longueur de la première partie (15) de la fibre optique (14) dépasse le diamètre de la plaque piézo-électrique (10).

11. Modulateur piézo-électrique à fibre optique selon la revendication 10, **caractérisé en ce que** la première partie (15) de la fibre optique (14) est disposée en spirale.

12. Modulateur piézo-électrique à fibre optique selon la revendication 10 ou la revendication 11, **caractérisé en ce que** la première partie (15) de la fibre optique (14) est fixée sur toute la longueur à la première surface (11) de la plaque piézo-électrique (10).

13. Modulateur piézo-électrique à fibre optique selon la revendication 10, la revendication 11 ou la revendication 12, **caractérisé en ce qu'**une deuxième partie (16) de la fibre optique (14) est fixée à la deuxième surface (12) de la plaque piézo-électrique (10).

14. Modulateur piézo-électrique à fibre optique selon la revendication 13, **caractérisé en ce que** la longueur de la deuxième partie (16) de la fibre optique (14) dépasse le diamètre de la plaque piézo-électrique (10).

15. Modulateur piézo-électrique à fibre optique selon la revendication 13 ou la revendication 14, **caractérisé en ce que** la deuxième partie (16) de la fibre optique (14) est disposée en spirale.

16. Modulateur piézo-électrique à fibre optique selon la revendication 13, la revendication 14 ou la revendication 15, **caractérisé en ce que** la deuxième partie (16) de la fibre optique (14) est fixée sur toute la longueur à la deuxième surface (12) de la plaque piézo-électrique (10).

17. Modulateur piézo-électrique à fibre optique selon l'une quelconque des revendications 10 à 16, **caractérisé en ce que** la plaque piézo-électrique (10) est construite en forme de disque.

18. Modulateur piézo-électrique à fibre optique selon l'une quelconque des revendications 10 à 17, **caractérisé en ce qu'**une fibre anisotrope est utilisée.

Fig. 1

Fig. 2

Fig. 3

Fig. 4

Fig. 5